(19) Europäisches Patentamt
European Patent Office
Office européen des brevets

(11) **EP 2 434 664 A1**

(12) **EUROPEAN PATENT APPLICATION**
published in accordance with Art. 153(4) EPC

(43) Date of publication:
**28.03.2012  Bulletin 2012/13**

(51) Int Cl.:
***H04B 10/00*** *(2006.01)*

(21) Application number: **10782922.8**

(86) International application number:
**PCT/CN2010/072250**

(22) Date of filing: **27.04.2010**

(87) International publication number:
**WO 2010/139218 (09.12.2010 Gazette 2010/49)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **04.06.2009  CN 200910086524**

(71) Applicant: **Huawei Technologies Co., Ltd.**
**Shenzhen, Guangdong 518129 (CN)**

(72) Inventor: **ZHANG, Guangyong**
**Shenzhen**
**Guangdong 518129 (CN)**

(74) Representative: **Thun, Clemens**
**Mitscherlich & Partner**
**Sonnenstraße 33**
**80331 München (DE)**

(54) **COMPENSATION METHOD AND APPARATUS FOR POLARIZATION MODE DISPERSION**

(57)  Embodiments of the present invention provide a method and an apparatus for compensating polarization mode dispersion. The method mainly includes: extracting an SOP (state of polarization) and a PMD (polarization mode dispersion) value of an optical signal, generating an SOP control signal according to the SOP, and adjusting the SOP of the optical signal through the SOP control signal; and generating a PMD control signal according to the PMD value, and through the PMD control signal, compensating a PMD of the optical signal whose SOP is adjusted. Through the embodiments of the present invention, a rapid change of the SOP can be adaptively tracked, a poor PMD compensation effect caused by a failure of a PMD compensation unit to track a change of the SOP is avoided, compensation performance of the PMD compensation unit is improved, and rapid PMD compensation may be achieved.

FIG. 2

## Description

This application claims priority to Chinese Patent Application No. 200910086524.6, filed with the Chinese Patent Office on June 4, 2009 and entitled "METHOD AND APPARATUS FOR COMPENSATING POLARIZATION MODE DISPERSION", which is incorporated herein by reference in its entirety.

### FIELD OF THE INVENTION

The present invention relates to the field of optical communications technologies, and in particularly to a method and an apparatus for compensating polarization mode dispersion (PMD, polarization mode dispersion).

### BACKGROUND OF THE INVENTION

A PMD originates from anisotropy of refractive index distribution generated in an optical fiber manufacturing process, and a polarization mode coupling effect produced in an optical cable laying process; and birefringence introduced by other optical communication components. The PMD causes differential group delay and energy coupling between two polarization modes of an optical fiber, which results in broadening and deformation of an output signal pulse. To eliminate an impact of the PMD, the PMD needs to be compensated.

Optical domain compensation of the PMD is implemented by inserting an optical component in an optical fiber transmission link to control a polarization state of light and adjust a delay, so as to achieve compensation of the PMD. This compensation method is advantageous in having a large PMD compensation range and being not limited by a system transmission rate.

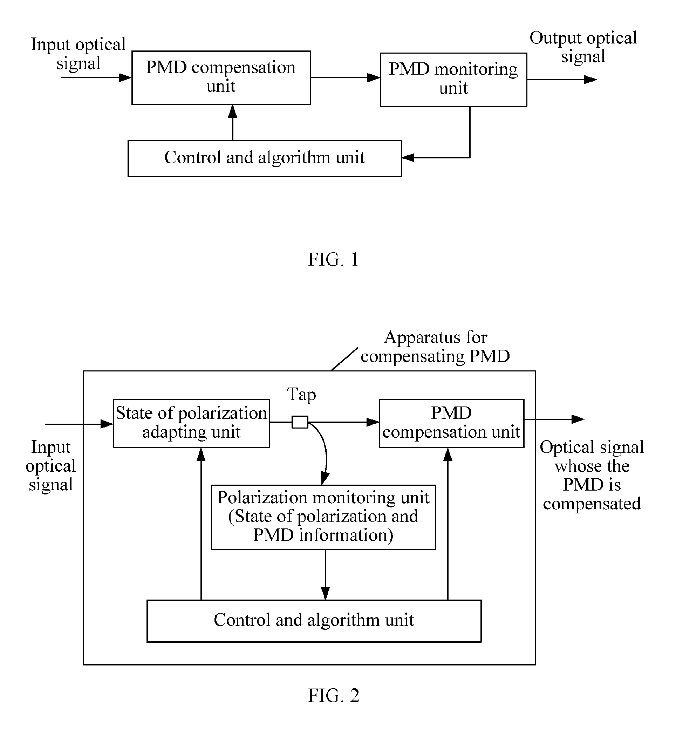

In the prior art, a structure of an apparatus for compensating PMD, that is, an OPMDC (Optical PMD Compensator, optical PMD compensator), is shown in FIG. 1, and the specific processing procedure includes:

In this compensation technology, a PMD compensation unit may be a PC (Polarization Controller, polarization controller), and a PMD monitoring unit monitors and feeds back a PMD of an optical transmission link to a control and algorithm unit. The control and algorithm unit generates a corresponding control electrical signal according to the PMD fed back by the PMD monitoring unit, and transmits the control electrical signal to the PMD compensation unit. The PMD compensation unit performs PMD compensation on a received input optical signal by using the received control electrical signal.

In the implementation of the present invention, the prior art has the following disadvantages:

Due to a limited hardware response speed and complexity of a control algorithm, it is difficult for an existing OPMDC to implement rapid PMD compensation. When an SOP of an input optical signal in an optical fiber link changes rapidly, the PMD compensation unit cannot respond to a change of the SOP in time, so that a PMD compensation effect of the PMD compensation unit is poor.

### SUMMARY OF THE INVENTION

Embodiments of the present invention provide a method and an apparatus for compensating a PMD, so that a PMD compensation unit can track a change of an SOP, thus improving compensation performance of the PMD compensation unit.

An apparatus for compensating polarization mode dispersion includes: a state of polarization adapting unit, a polarization monitoring unit, a control and algorithm unit, and a PMD compensation unit, where,

the polarization monitoring unit is configured to extract a state of polarization, SOP, and a polarization mode dispersion PMD value of an optical signal, and transmit the extracted SOP and PMD value to the control and algorithm unit;

the control and algorithm unit is configured to generate an SOP control signal according to the SOP transmitted by the polarization monitoring unit, generate a PMD control signal according to the PMD value transmitted by the polarization monitoring unit, transmit the SOP control signal to the state of polarization adapting unit, and transmit the PMD control signal to the PMD compensation unit;

the state of polarization adapting unit is configured to, according to the SOP control signal transmitted by the control and algorithm unit, adjust a change rate of the SOP of the optical signal to be lower than a set value, and transmit the optical signal whose SOP is adjusted to the PMD compensation unit; and

the PMD compensation unit is configured to, according to the PMD control signal transmitted by the control and algorithm unit, compensate a PMD of the optical signal that is transmitted by the state of polarization adapting unit, and output the optical signal whose PMD is compensated.

A method for compensating polarization mode dispersion includes:

extracting a state of polarization, SOP, of an optical signal, generating an SOP control signal according to the SOP, and adjusting a change rate of the SOP of the optical signal to be lower than a set value through the SOP control signal; and
extracting a polarization mode dispersion PMD value of the optical signal, generating a PMD control signal according to the PMD value, and through the PMD control signal, performing compensation on a PMD of the optical signal whose SOP is adjusted.

It can be seen from the foregoing technical solutions provided in the embodiments of the present invention that, in the embodiments of the present invention, the SOP and the PMD value of the optical signal are extracted, and the SOP control signal and the PMD control signal are generated, so that a rapid change of the SOP can be adaptively tracked, a poor PMD compensation effect caused by a failure of the PMD compensation unit to track the change of the SOP is avoided, compensation performance of the PMD compensation unit is improved, and rapid PMD compensation may be implemented.

**BRIEF DESCRIPTION OF THE DRAWINGS**

To describe the technical solutions in the embodiments of the present invention more clearly, the accompanying drawings required for describing the embodiments are introduced briefly in the following. Apparently, the accompanying drawings in the following description are only some embodiments of the present invention, and persons of ordinary skill in the art may also derive other drawings from these accompanying drawings without creative efforts.

FIG. 1 is a schematic structural diagram of an apparatus for compensating a PMD in the prior art;
FIG. 2 is a schematic structural diagram of an apparatus for compensating a PMD according to a first embodiment of the present invention;
FIG. 3 is a schematic structural diagram of an apparatus for compensating a PMD according to a second embodiment of the present invention;
FIG. 4 is a schematic diagram of a state of polarization adapting unit implemented by using a combination of a 1/4 waveplate and a 1/2 waveplate according to a third embodiment of the present invention;
FIG. 5 is a schematic diagram of a state of polarization adapting unit implemented by using a combination of a waveplate with an adjustable phase delay and an adjustable azimuth angle, and a 1/4 waveplate according to the third embodiment of the present invention;
FIG. 6 is a schematic structural diagram of an apparatus for compensating a PMD according to a fourth embodiment of the present invention;
FIG. 7 is a schematic structural diagram of an apparatus for compensating a PMD according to a fifth embodiment of the present invention;
FIG. 8 is a schematic structural diagram of a polarimeter according to the fifth embodiment of the present invention; and
FIG. 9 is a processing flow chart of a method for compensating a PMD according to a sixth embodiment of the present invention.

**DETAILED DESCRIPTION OF THE EMBODIMENTS**

In embodiments of the present invention, an SOP and a PMD value of an optical signal are extracted, an SOP control signal is generated according to the SOP, and the SOP of the optical signal is adjusted through the SOP control signal; and a change rate of the SOP of the optical signal is adjusted to be lower than a set value, for example, adjusted to be a constant value.
A PMD control signal is generated according to the PMD value, and a PMD of the optical signal whose SOP is adjusted is compensated through the PMD control signal.
To facilitate understanding of the embodiments of the present invention, several specific embodiments are taken as examples for further description in the following with the accompanying drawings, and each embodiment does not limit the embodiments of the present invention.

**Embodiment 1**

This embodiment provides a structure of an apparatus for compensating a PMD. As shown in FIG. 2, the apparatus includes a polarization monitoring unit, a control and algorithm unit, a state of polarization adapting unit, and a PMD compensation unit. A function of each unit is as follows:

The polarization monitoring unit is configured to receive an optical signal through an optical splitter, where the optical signal is output by the state of polarization adapting unit, extract an SOP and a PMD value of the optical signal, and transmit the extracted SOP and PMD value to the control and algorithm unit.

The control and algorithm unit is configured to, according to the SOP transmitted by the polarization monitoring unit, invoke an optimization algorithm, for example, a simplex algorithm or a particle swarm optimization algorithm, to perform calculation, convert a calculation result into an SOP control signal, through digital-to-analog conversion, convert the SOP control signal into a control voltage signal that is corresponding to the state of polarization adapting unit, and transmit the control voltage signal to the state of polarization adapting unit; and in the same way, according to the PMD value transmitted by the polarization monitoring unit, invoke the optimization algorithm to perform calculation, convert a calculation result into a PMD control signal, and transmit the PMD control signal to the PMD compensation unit.

The state of polarization adapting unit is configured to receive an optical signal, where an SOP of the optical signal changes rapidly, further receive the SOP control signal transmitted by the control and algorithm unit, where the SOP control signal is generally a control voltage signal, and adjust the SOP of the received optical signal by using the control voltage signal. The adjusted SOP of the optical signal is monitored and sampled by the polarization monitoring unit again. The control and algorithm unit generates and transmits a control voltage signal to the state of state of polarization adapting unit again. The process is repeated in this way until the change rate of the SOP of the optical signal is adjusted to be lower than a set value, for example, adjusted to be a constant value. That is, the change rate of the SOP of the optical signal is adjusted from high to low. And then, the optical signal whose SOP is adjusted is output.

The PMD compensation unit is configured to, according to the PMD control signal transmitted by the control and algorithm unit, compensate a PMD of another optical signal transmitted by the optical splitter, so as to complete compensation of the PMD of the optical signal.

In practical application, the polarization monitoring unit may be implemented online by using an online optical component, for example, an online polarization detector. Under this circumstance, the polarization monitoring unit extracts the SOP and the PMD value in real time from the optical signal that is output by the state of polarization adapting unit, and at this time, the optical splitter in FIG. 1 may be omitted.

**Embodiment 2**

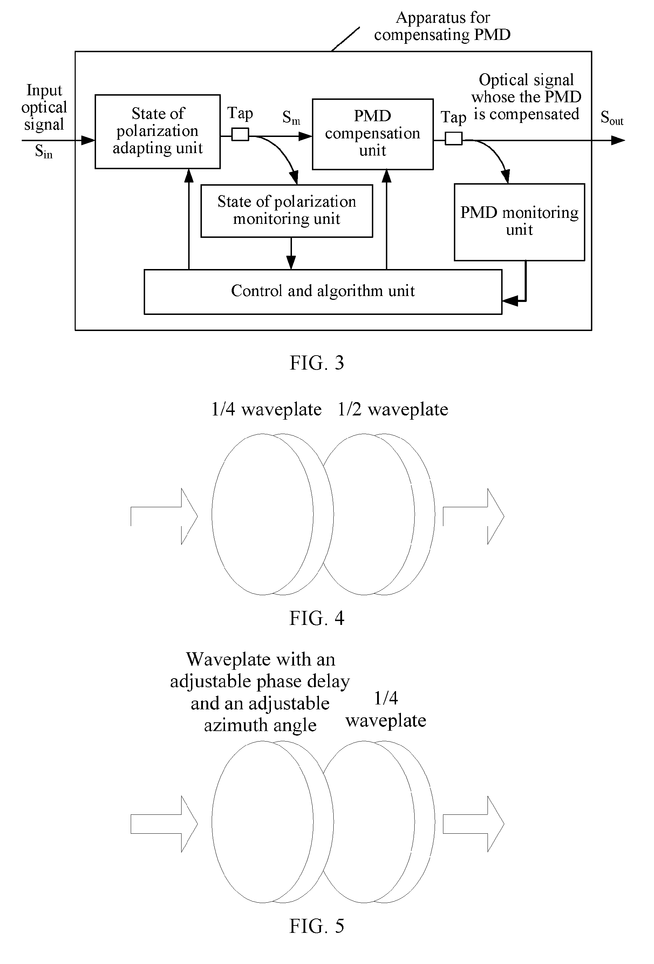

This embodiment provides a structure of an apparatus for compensating a PMD. As shown in FIG. 3, the apparatus includes: a polarization monitoring unit, a control and algorithm unit, a state of polarization adapting unit, and a PMD monitoring unit. In this embodiment, the polarization monitoring unit and the PMD monitoring unit together implement the function of the polarization monitoring unit in the preceding embodiment 1, where the polarization monitoring unit is configured to extract an SOP of an optical signal, and the PMD monitoring unit is configured to extract a PMD value of the optical signal. A specific function of each unit is as follows:

The polarization monitoring unit is configured to receive an optical signal through a first optical splitter, where the optical signal is output by the state of polarization adapting unit, extract an SOP of the optical signal, and transmit the extracted SOP to the control and algorithm unit.

The PMD monitoring unit is configured to receive an optical signal through a second optical splitter, where the optical signal is output by the PMD compensation unit, extract a PMD value of the optical signal, and transmit the extracted PMD value to the control and algorithm unit.

The control and algorithm unit is configured to, according to the SOP transmitted by the polarization monitoring unit, invoke an optimization algorithm, for example, a simplex algorithm or a particle swarm optimization algorithm, to perform calculation, and convert a calculation result into an SOP control signal; and in the same way, according to the PMD value transmitted by the polarization monitoring unit, invoke the optimization algorithm to perform calculation, and convert a calculation result into a PMD control signal, transmit the SOP control signal to the polarization state adapting unit, and transmit the PMD control signal to the PMD compensation unit.

The state of polarization adapting unit is configured to receive an optical signal, where an SOP of the optical signal changes rapidly, and according to the SOP control signal transmitted by the control and algorithm unit, adjust the SOP of the received optical signal, so as to adjust a change rate of the SOP of the optical signal to be lower than a set value, for example, adjust to be a constant value. That is, the change rate of the SOP of the optical signal is adjusted from high to low. And then, the optical signal whose SOP is adjusted is output.

The PMD compensation unit is configured to, according to the PMD control signal transmitted by the control and algorithm unit, compensate a PMD of the optical signal that is transmitted by the first optical splitter, so as to complete compensation of the PMD of the optical signal.

In practical application, the polarization monitoring unit and the PMD monitoring unit may be implemented online by using an online optical component, for example, an online polarization detector. Under this circumstance, the polarization monitoring unit extracts the SOP in real time from the optical signal that is output by the state of polarization adapting unit, and the PMD monitoring unit extracts the PMD value in real time from the optical signal that is output by the PMD compensation unit. At this time, the optical splitters in FIG. 3 may be omitted.

In practical application, in this embodiment of the present invention, the polarization monitoring unit may also be placed in front of the state of polarization adapting unit, that is, the optical signal first passes through the polarization monitoring unit, and then enters the state of state of polarization adapting unit. At this time, the polarization monitoring unit extracts the SOP of the optical signal that is received by the state of polarization adapting unit.

**Embodiment 3**

In this embodiment of the present invention, a state of polarization adapting unit may be implemented by using a polarization controller, and the polarization controller may convert an SOP of an input optical signal.

The polarization controller may be implemented in the following manners:

Manner 1: A main axis angle is fixed, and a phase delay is variable;
Manner 2: The phase delay is fixed, and the main axis angle is variable (for example, a 1/4 waveplate and a 1/2 waveplate); and
Manner 3: The phase delay and the main axis angle are both variable.

In this embodiment of the present invention, the state of polarization adapting unit may also be implemented by using a combination of waveplates, for example, as shown in FIG. 4, implemented by using a combination of a 1/4 waveplate and a 1/2 waveplate; and as shown in FIG. 5, implemented by using a combination of a waveplate with an adjustable phase delay and an adjustable azimuth angle, and a 1/4 waveplate.

By rotating a main axis direction of the 1/4 waveplate and the 1/2 waveplate in FIG. 4, a polarization state may be converted randomly. A first 1/4 waveplate may be rotated to turn a circular polarized light into a linear polarized light, and the 1/2 waveplate disposed behind the 1/4 waveplate may be rotated to adjust the linear polarized light to an appropriate output angle.

A transfer matrix of the polarization controller that is formed by the 1/4 waveplate and the 1/2 waveplate behind the 1/4 waveplate may be expressed by a Jones matrix as follows:

$$T = \begin{bmatrix} \cos\phi & -\sin\phi \\ \sin\phi & \cos\phi \end{bmatrix} \begin{bmatrix} 1 & 0 \\ 0 & -1 \end{bmatrix} \begin{bmatrix} \cos\phi & \sin\phi \\ -\sin\phi & \cos\phi \end{bmatrix} \begin{bmatrix} \cos\theta & -\sin\theta \\ \sin\theta & \cos\theta \end{bmatrix} \begin{bmatrix} 1 & 0 \\ 0 & -j \end{bmatrix} \begin{bmatrix} \cos\theta & \sin\theta \\ -\sin\theta & \cos\theta \end{bmatrix}.$$

Then, a relation between a polarization state of an output optical signal and a polarization state of an input optical signal may be expressed by a transfer matrix as follows:

$$\vec{S}_{out} = T\vec{S}_{in}.$$

Therefore, a control voltage of the polarization controller is controlled to change azimuth angles $\phi$ and $\theta$ in the transfer matrix of the polarization controller, so as to change the polarization states of the input and output optical signals.

**Embodiment 4**

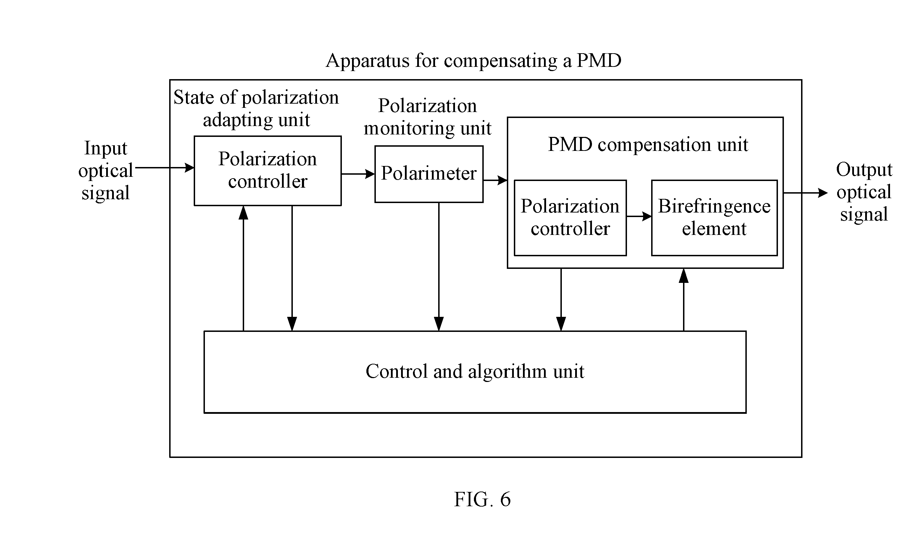

This embodiment provides a structure of an apparatus for compensating a PMD. As shown in FIG. 6, the apparatus includes: a polarization monitoring unit, a control and algorithm unit, a state of polarization adapting unit, and a PMD monitoring unit. In this embodiment, the polarization monitoring unit and the PMD monitoring unit together implement the function of the polarization monitoring unit in the preceding embodiment 1, where the polarization monitoring unit is configured to extract an SOP of an optical signal, and the PMD monitoring unit is configured to extract a PMD value of the optical signal. A function of each unit is as follows:

The polarization monitoring unit is implemented by using a polarimeter, and extracts and transmits an SOP and a PMD value of an optical signal that is output by the state of polarization adapting unit to the control and algorithm unit.

The control and algorithm unit, according to the SOP transmitted by the polarization monitoring unit, invokes an optimization algorithm, for example, a simplex algorithm or a particle swarm optimization algorithm, to perform calculation, calculates an adjusting parameter of a polarization controller that serves as the state of polarization adapting unit, and transmits the adjusting parameter to the polarization controller that serves as the state of polarization adapting unit. The control and algorithm unit, according to the PMD value transmitted by the polarization monitoring unit, further invokes the optimization algorithm to calculate and obtain a control parameter of the polarization controller and a control parameter of a variable delayer in the PMD compensation unit, and outputs the control parameters to the PMD compensation unit.

The state of polarization adapting unit is implemented by using the polarization controller, and adjusts an SOP of a received optical signal by using the adjusting parameter of the polarization controller, where the adjusting parameter is transmitted by the control and algorithm unit, so as to adjust a change rate of the SOP of the optical signal to be lower than a set value, for example, adjust to be a constant value. That is, the change rate of the SOP of the optical signal is adjusted from high to low, so that an optical signal entering the PMD compensation unit has an SOP that changes slowly or is stable.

The PMD compensation unit is formed by a polarization controller and a birefringence element, where the birefringence element may be implemented by using a polarization maintaining optical fiber or a differential group delay. The PMD compensation unit may have a one-stage or multiple-stage compensation structure, where the one-stage compensation structure may be PC (Polarization Controller, polarization controller)+DGD (Differential Group Delayer, differential group delay) or PC+VDGD (Variable Differential Group Delay, variable differential group delay), and a two-stage compensation structure may be PC1+DGD+PC2+DGD2 or PC1 + DGD+PC2+VDGD2. The two-stage compensation structure may be used to compensate a first-order PMD and a second-order PMD.

The PMD compensation unit, according to the control parameter of the polarization controller and the control parameter of the variable delayer, where the control parameters are transmitted by the control and algorithm unit, compensates a PMD of the optical signal, so as to complete compensation of the PMD of the optical signal.

**Embodiment 5**

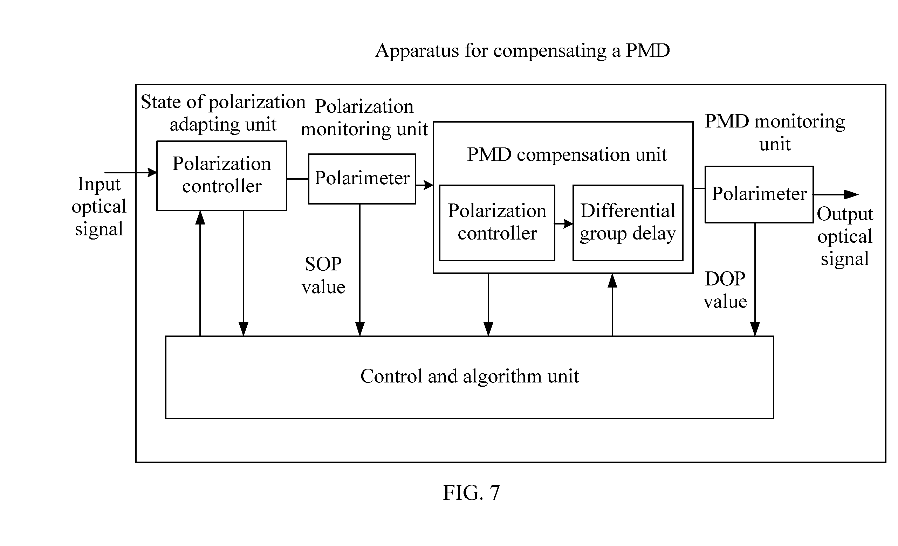

This embodiment provides a structure of an apparatus for compensating a PMD. As shown in FIG. 7, the apparatus includes: a polarization monitoring unit, a control and algorithm unit, a state of polarization adapting unit, and a PMD monitoring unit. In this embodiment, the polarization monitoring unit and the PMD monitoring unit together implement the function of the polarization monitoring unit in the preceding embodiment 1, where the polarization monitoring unit is configured to extract an SOP of an optical signal, and the PMD monitoring unit is configured to extract a PMD value of the optical signal. A function of each unit is as follows:

The polarization monitoring unit adopts a polarimeter to monitor stokes (stokes) parameters (S0, S1, S2, and S3) of an optical signal that is output by the state of state of polarization adapting unit, and feeds back the stokes parameters to the control and algorithm unit. The S1, S2, S3 in the stokes parameters respectively represent an SOP of the optical signal, therefore, the stokes parameters may directly represent the SOP of the optical signal.

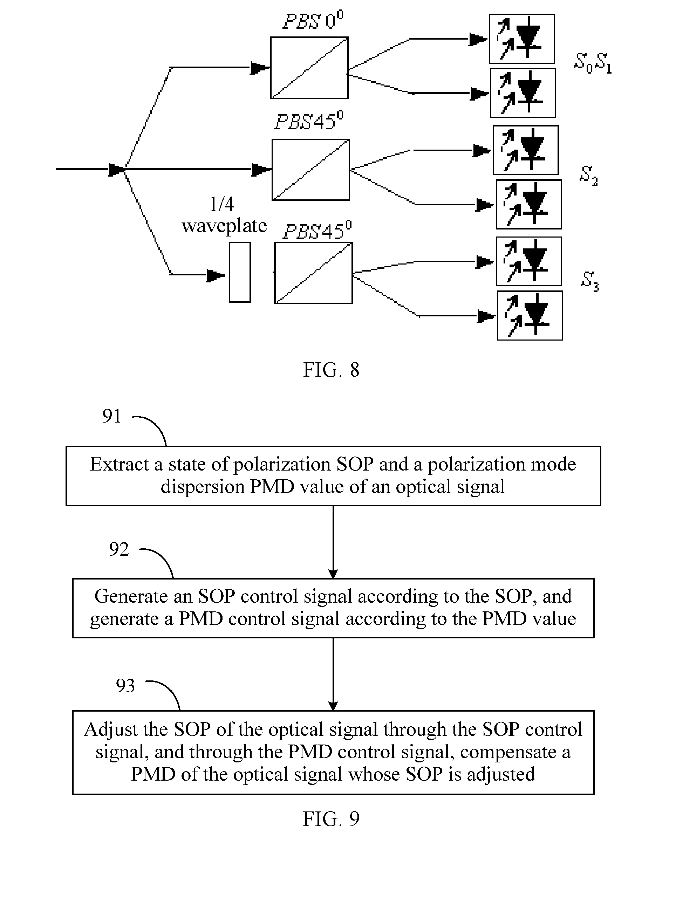

A structure of a polarimeter is shown in FIG. 8, and the four Stokes parameters are obtained by the polarimeter in the following process:

After the optical signal that is output from the state of polarization adapting unit passes through the polarimeter, the polarimeter generates four voltages (V1, V2, V3, and V4). After modulus sampling is performed on the voltages (V1, V2, V3, and V4), the stokes parameters of the optical signal are obtained through the following conversion matrix.

$$
\begin{pmatrix} S_0 \\ S_1 \\ S_2 \\ S_3 \end{pmatrix} = M \begin{pmatrix} V_1 \\ V_2 \\ V_3 \\ V_4 \end{pmatrix} = \begin{pmatrix} m_{11} & m_{12} & m_{13} & m_{14} \\ m_{21} & m_{22} & m_{23} & m_{24} \\ m_{31} & m_{32} & m_{33} & m_{34} \\ m_{41} & m_{42} & m_{43} & m_{44} \end{pmatrix} \begin{pmatrix} V_1 \\ V_2 \\ V_3 \\ V_4 \end{pmatrix}.
$$

V1, V2, V3, and V4 are output voltages of four photodiodes of the polarimeter, M is a 4*4 transfer matrix, and stokes parameters (S0, S1, S2, and S3) of an input optical signal are obtained through the matrix. Then, the obtained stokes parameters are fed back to the control and algorithm unit.

The PMD monitoring unit adopts the polarimeter to monitor the Stokes parameters of the optical signal that is output by the PMD compensation unit, obtains a DOP (Degree of Polarization, degree of polarization) of the optical signal through calculation according to the Stokes parameters, and feeds back the DOP to the control and algorithm unit. The DOP of the optical signal and a PMD of an optical fiber link form a monotonically decreasing function, and when the DOP of the optical signal reaches a maximum value, the PMD of the optical fiber link reaches a minimum value.

A process of obtaining the DOP of the optical signal through calculation according to the Stokes parameters mainly includes:

Taking a narrowband light source as an example, the narrowband light source is processed as quasi-monochromatic light. It is considered that an optical wave is transmitted with an average frequency $\overline{\overline{v}}$ in a $z$ direction, and a electric field of the optical wave may be expressed as:

$$E_x(t) = a_1(t)\exp[\varphi_1(t) - 2\pi\overline{v}t];$$

$$E_y(t) = a_2(t)\exp[\varphi_2(t) - 2\pi\overline{v}t].$$

In a stokes space, Stokes parameters of the quasi-monochromatic light are defined as:

$$s_0 = \left\langle E_x^2(t) \right\rangle + \left\langle E_y^2(t) \right\rangle = I_x + I_y = I_0;$$

$$s_1 = \left\langle E_x^2(t) \right\rangle - \left\langle E_y^2(t) \right\rangle = I_x - I_y;$$

$$s_2 = 2\left\langle E_x(t)E_y(t)\cos(\delta) \right\rangle = I_{+45°} - I_{-45°};$$

$$s_3 = 2\left\langle E_x(t)E_y(t)\sin(\delta) \right\rangle = I_{Q,-45^0} - I_{Q,+45^0}.$$

$I_0$ is total light intensity, $I_x$ and $I_y$ are respectively intensity of the light passing through a polarizing plate that is disposed in $x$ axis and $y$ axis directions, $I_{+45°}$ and $I_{-45°}$ are respectively intensity of the light passing through the polarizing plate that is disposed at an angle of $\pm 45°$, and $I_{Q,-45°}$ and $I_{Q,+45°}$ are respectively light intensity that are measured when a 1/4 waveplate is disposed in front of the $\pm 45°$ polarizing plate. For completely polarized light, $s_0^2 = s_1^2 + s_2^2 + s_3^2$; for partially polarized light, $s_0^2 > s_1^2 + s_2^2 + s_3^2$; and for natural light, $s_1^2 + s_2^2 + s_3^2 = 0$.

Therefore, a degree of polarization of the light - a proportion of the completely polarized light in the total intensity is obtained:

$$DOP = \frac{I_{pol}}{I_{tot}} = \frac{\sqrt{s_1^2 + s_2^2 + s_3^2}}{s_0}.$$

$I_{pol}, I_{tot}$ respectively represent the light intensity and the total light intensity of the polarized light. It can be seen from the preceding formula that, the quantity of the four parameters $s_0$, $s_1$, $s_2$, $s_3$ is measured as follows. The optical wave respectively passes through linear polarizers in horizontal and vertical directions, linear polarizers in $\pm 45°$ directions, and a left-hand polarizer and a right-hand polarizer. According to a measurement result, the DOP may be calculated. The preceding process is implemented to obtain the DOP of the optical signal by measuring the $s_0$, $s_1$, $s_2$, $s_3$.

The control and algorithm, according to the stokes parameters (that is, the SOP) of the current optical signal transmitted by the polarization monitoring unit, invokes the optimization algorithm to calculate a control signal that is required by the state of polarization adapting unit, and through digital-to-analog conversion, converts the control signal into a control voltage signal that is corresponding to the state of polarization adapting unit. Therefore, the state of polarization adapting unit adjusts an SOP of the input optical signal by using the control voltage signal.

Taking a PSO algorithm as an example, a process of calculating the control signal by the control and algorithm unit is mainly as follows:

1. Compare an error between a current SOP and a target SOP of the optical signal;
2. If the current SOP meets a requirement set for the target SOP, the state of polarization adapting unit may not be used for adjustment. If the current SOP does not meet the requirement set for the target SOP, the PSO algorithm is invoked to perform the following processing:

Step 1: Initialize a particle swarm (currently, 20 particles are adopted), and calculate a fitness function (for example, the function described in the embodiment 5) corresponding to the particles; and store an optimal fitness value and a corresponding particle position in the current particle swarm;

Step 2: Determine whether the current optimal fitness value satisfies the requirement, and if the current optimal fitness value satisfies the requirement, continue to perform the algorithm; otherwise, end the algorithm;

Step 3: According to the current optimal fitness value, a historical optimal fitness value of each particle, and an original moving speed of the particle, generate a new speed for each particle. The new speed of the particle is:

$$\mathbf{v}_i^{k+1} = \omega * \mathbf{v}_i^k + c_1 \left( pbest_i - \mathbf{x}_i^k \right) + c_2 \left( gbest - \mathbf{x}_i^k \right),$$

Step 4: According to the newly generated speed, calculate a new position of each particle. The new position of the particle is:

$$\mathbf{x}_i^{k+1} = \mathbf{x}_i^k + \mathbf{v}_i^{k+1}.$$

Step 5: Calculate a fitness value of the particle at the new position;

Step 6: According to the fitness value of the particle at the new position, update a system global optimal fitness value, and record an optimal position;

Step 7: According to the fitness value of the particle at the new position, update the historical optimal fitness value of each particle, and record the optimal position; and

Step 8: Return to Step 2.

Here, the particle refers to a combination of the control signals of the state of polarization adapting unit. The position of the particle refers to a size of the control signal of the state of polarization adapting unit, and the speed of the particle refers to update amplitude of the control signal.

The control and algorithm unit, according to the DOP of the optical signal, where the DOP is transmitted by the PMD monitoring unit, further invokes the optimization algorithm to calculate a control parameter of a polarization controller and a control parameter of a variable delayer in the PMD compensation unit, and outputs the control parameters to the PMD compensation unit.

The state of polarization adapting unit is implemented by using the polarization controller, and adjusts an SOP of a received optical signal by using an adjusting parameter transmitted by the control and algorithm unit, so that a change rate of the Stokes parameters (S0, S1, S2, and S3) that are corresponding to the SOP monitored by the polarization monitoring unit is adjusted to be lower than a set value, for example, adjusted to be a constant value. That is, the change rate of the SOP of the optical signal is adjusted from high to low.

A process of adjusting the Stokes parameters (S0, S1, S2, and S3) that are corresponding to the SOP to be constant values or variables within certain thresholds specifically includes:

The polarization monitoring unit detects the optical signal, outputs four corresponding voltage signals V1, V2, V3, and V4, and obtains four corresponding stokes parameters (S0', S1', S2', and S3') after modulus sampling. It is assumed that stokes parameters corresponding to a target polarization state are (S0, S1, S2, and S3), a function is set:

$$f = \exp\left[\frac{1}{\left|S_1^{'} - S_1\right| + \left|S_2^{'} - S_2\right| + \left|S_3^{'} - S_3\right|}\right].$$

A minimum value fmin of the function is solved, stokes parameters (S0', S1', S2', and S3') corresponding to the fmin represent the constant values, or make |f|≤a set threshold, so that the parameters (S0', S1, S2', and S3') that are corresponding to the |f| in a certain range meet an adjusting requirement of the SOP.

The PMD compensation unit is implemented by using a polarization controller and a birefringence element, for example, a first-stage compensator (PC+DGD) shown in FIG. 7, and may also be implemented by using a second-stage or multiple-stage compensator. According to the control parameter of the polarization controller and the control parameter of the variable delayer that are transmitted by the control and algorithm unit, a PMD of the optical signal is compensated, so that the DOP of the optical signal whose PMD is compensated reaches a maximum value, thus achieving compensation of the PMD. The DOP is in a range of 0 to 1, and when DOP = 1, it indicates that the optical signal has no PMD impairment; and when DOP = 0, it indicates that the optical signal is completely depolarized, that is, the optical signal suffers PMD impairment. The DOP value may be an RF (Radio Frequency, radio frequency), an EOP (Eye Opening Penalty, eye opening penalty), a BER (Bit Error Rate, bit error rate), or an FEC (Forward Error Correction, forward error correction).

In the preceding embodiment of the present invention, the apparatus for compensating the PMD may ensure that the SOP of the optical signal passing through the state of polarization adapting unit is stable or changes within a small range, so that the SOP of the input optical signal is converted to be a stable SOP, where the SOP of the input optical signal changes rapidly, and the stable SOP is output as an SOP that changes slowly or changes within a small range. For example, the SOP of the input optical signal is 200 rad/s (the SOP changes randomly in the stokes space, and the change rate is 200 rad/s), the target SOP set in the system is represented as (0, 1, 0) in the stokes space, and the apparatus for compensating the PMD described in the preceding embodiment of the present invention may be adopted to stabilize the output SOP of the optical signal that passes through the state of polarization adapting unit to be close to the target SOP (0, 1, 0).

**Embodiment 6**

As shown in FIG. 9, a processing procedure of a method for compensating polarization mode dispersion provided in this embodiment includes the following processing steps:

Step 91: Extract a state of polarization, SOP, and a polarization mode dispersion PMD value of an optical signal.

Receive the optical signal through an optical link, where the SOP of the optical signal changes rapidly. Extract the SOP and the PMD value of the optical signal online through an optical component, such as a polarization detector.

Step 92: Generate an SOP control signal according to the SOP, and generate a PMD control signal according to the PMD value.

According to the extracted SOP, invoke an optimization algorithm, for example, a simplex algorithm or a particle swarm optimization algorithm, to perform calculation, and convert a calculation result into an SOP control signal. In the same way, according to the extracted PMD value, invoke the optimization algorithm to perform calculation, and convert a calculation result into a PMD control signal.

Step 93: Adjust the SOP of the optical signal through the SOP control signal, and through the PMD control signal, compensate a PMD of the optical signal whose SOP is adjusted.

The SOP of the optical signal is adjusted according to the SOP control signal, so that a change rate of the adjusted SOP of the optical signal is adjusted to be lower than a set value, for example, adjusted to be a constant value.

Then, through the PMD control signal, the PMD of the optical signal whose SOP is adjusted is compensated, so that an optical signal that suffers PMD impairment is compensated and then output, thus completing PMD compensation of the optical signal.

In practical application, the SOP of the optical signal whose SOP is adjusted in step 93 may be extracted, and the PMD value of the optical signal whose PMD is compensated in step 93 may also be extracted.

In practical application, stokes parameters of the optical signal may be extracted to serve as the SOP of the optical signal, and under this circumstance, the processing procedure in this embodiment may be:

Extract the stokes parameters of the optical signal, and use the stokes parameters as the SOP of the optical signal. Then, compare the stokes parameters of the optical signal with target stokes parameters, and invoke an optimization algorithm to calculate an SOP control signal according to a comparison result. And then, adjust the SOP of the optical signal according to the SOP control signal, so that a change rate of the stokes parameters of the optical signal is adjusted to be lower than a set value, for example, adjusted to be a constant value.

The adjusting the change rate of the stokes parameters of the optical signal to be lower than the set value may include:

setting the stokes parameters of the optical signal as: S0', S1', S2', and S3'; setting the stokes parameters corresponding to the target SOP as S0, S1, S2, and S3; and
setting a function as follows:

$$f = \exp\left[\frac{1}{\left|S_1' - S_1\right| + \left|S_2' - S_2\right| + \left|S_3' - S_3\right|}\right].$$

When an absolute value of the function f satisfies $|f| \le$ a set threshold, the change rate of the stokes parameter corresponding to the $|f|$ is lower than a set value, and the stokes parameters corresponding to the minimum value of the function f are constant values.

In practical application, a DOP of the optical signal may also be used to replace the PMD value of the optical signal, and under this circumstance, the processing procedure in this embodiment may be:

Extract stokes parameters of the optical signal whose PMD is compensated, and calculate a DOP of the optical signal according to the stokes parameters. Then, generate a PMD control signal according to the DOP, and compensate a PMD of the optical signal whose SOP is adjusted through the PMD control signal, so that the DOP of the optical signal whose PMD is compensated reaches a maximum value.

Persons of ordinary skill in the art may understand that all or a part of the procedures of the method in the preceding embodiments may be implemented by a computer program instructing relevant hardware. The program may be stored in a computer readable storage medium. When the program runs, the procedures of the method in the preceding embodiments are performed. The storage medium may be a magnetic disk, an optical disk, a Read-Only Memory (Read-Only Memory, ROM), or a Random Access Memory (Random Access Memory, RAM).

In sum, in the embodiments of the present invention, a rapid change of the SOP can be adaptively tracked, the change rate of the SOP of the optical signal is adjusted from high to low or to be fixed, so that a poor PMD compensation effect caused by a failure of the PMD compensation unit to track the change of the SOP is avoided.

In the embodiments of the present invention, the change rate of the SOP of the optical signal is adjusted from high to low or to be fixed, so that a requirement on a response speed of the PMD compensation unit is lowered, a control algorithm of the PMD compensation unit is simplified, compensation performance of the PMD compensation unit is improved, and rapid PMD compensation may be achieved.

The preceding descriptions are merely exemplary embodiments of the present invention, but are not intended to limit the protection scope of the present invention. Changes or replacements easily thought of by persons skilled in the art within the technical scope disclosed by the present invention shall all fall within the protection scope of the present invention. Therefore, the protection scope of the present invention shall be subject to that of the appended claims.

**Claims**

1. An apparatus for compensating polarization mode dispersion, comprising: a state of polarization adapting unit, a polarization monitoring unit, a control and algorithm unit, and a polarization mode dispersion PMD compensation unit, wherein,
the polarization monitoring unit, configured to extract a state of polarization, SOP, and a PMD value of an optical signal, and transmit the extracted SOP and PMD value to the control and algorithm unit;
the control and algorithm unit, configured to generate an SOP control signal according to the SOP transmitted by the polarization monitoring unit, generate a PMD control signal according to the PMD value transmitted by the polarization monitoring unit, transmit the SOP control signal to the state of polarization adapting unit, and transmit the PMD control signal to the PMD compensation unit;
the state of polarization adapting unit, configured to, according to the SOP control signal transmitted by the control and algorithm unit, adjust a change rate of the SOP of the optical signal to be lower than a set value, and transmit the optical signal whose SOP is adjusted to the PMD compensation unit; and
the PMD compensation unit, configured to, according to the PMD control signal transmitted by the control and algorithm unit, compensate a PMD of the optical signal that is transmitted by the state of polarization adapting unit, and output the optical signal whose PMD is compensated.

**2.** The compensation apparatus according to claim 1, wherein
the polarization monitoring unit is configured to extract an SOP of an optical signal that is received or output by the state of polarization adapting unit, and extract a PMD value of the optical signal that is output by the state of polarization adapting unit or a PMD value of an optical signal that is output by the PMD compensation unit.

**3.** The compensation apparatus according to claim 1, wherein
the polarization monitoring unit is further configured to extract stokes parameters of the optical signal that is output by the state of polarization adapting unit, and transmit the stokes parameters as the SOP of the optical signal to the control and algorithm unit;
the control and algorithm unit is further configured to compare the stokes parameters of the optical signal with target stokes parameters, wherein the stokes parameters of the optical signal are transmitted by the polarization monitoring unit, invoke an optimization algorithm to calculate an SOP control signal according to a comparison result, and transmit the SOP control signal to the state of polarization adapting unit; and
the state of polarization adapting unit is further configured to, according to the SOP control signal transmitted by the control and algorithm unit, adjust the SOP of the received optical signal, so that a change rate of the stokes parameters of the optical signal is adjusted to be lower than a set value, wherein the stokes parameters of the optical signal are extracted by the polarization monitoring unit.

**4.** The compensation apparatus according to claim 1, wherein
the polarization monitoring unit is further configured to extract stokes parameters of the optical signal that is output by the PMD compensation unit, calculate a degree of polarization DOP of the optical signal according to the stokes parameters, and transmit the DOP to the control and algorithm unit;
the control and algorithm unit is further configured to, according to the DOP transmitted by the polarization monitoring unit, generate a PMD control signal, and transmit the PMD control signal to the PMD compensation unit; and
the PMD compensation unit is further configured to, according to the PMD control signal transmitted by the control and algorithm unit, compensate the PMD of the optical signal transmitted by the state of polarization adapting unit, so that the DOP of the optical signal reaches a maximum value, wherein the DOP of the optical signal is extracted by the polarization monitoring unit.

**5.** The compensation apparatus according to any one of claims 1 to 4, wherein
the state polarization of adapting unit is implemented by using a combination of waveplates or a polarization controller.

**6.** The compensation apparatus according to claim 5, wherein
the polarization controller comprises: a polarization controller with a fixed main axis angle and a variable phase delay, a polarization controller with a fixed phase delay and a variable main axis angle, or a polarization controller with both a variable phase delay and a variable main axis angle.

**7.** The compensation apparatus according to claim 5, wherein
the waveplate comprises: a 1/4 waveplate, a 1/2 waveplate, or any waveplate with an adjustable phase delay and an adjustable main axis angle.

**8.** The compensation apparatus according to any one of claims 1 to 4, wherein
the PMD compensation unit is implemented by using a combination of a polarization controller and a birefringence element, and the birefringence element is implemented by using a polarization maintaining optical fiber or a differential group delay; and
the polarization monitoring unit is implemented by using a polarimeter.

**9.** A method for compensating polarization mode dispersion, comprising:

extracting a state of polarization, SOP, of an optical signal, generating an SOP control signal according to the SOP, and adjusting a change rate of the SOP of the optical signal to be lower than a set value through the SOP control signal; and
extracting a polarization mode dispersion PMD value of the optical signal, generating a PMD control signal according to the PMD value, and through the PMD control signal, compensating a PMD of the optical signal whose SOP is adjusted.

**10.** The method for compensating polarization mode dispersion according to claim 9, wherein the extracting the state of polarization SOP of the optical signal, generating the SOP control signal according to the SOP, and adjusting the change rate of the SOP of the optical signal to be lower than the set value through the SOP control signal comprises:

extracting stokes parameters of the optical signal, and using the stokes parameters as the SOP of the optical signal;
comparing the stokes parameters of the optical signal with target stokes parameters, and invoking an optimization algorithm to calculate an SOP control signal according to a comparison result; and
adjusting the SOP of the optical signal according to the SOP control signal, so that a change rate of the stokes parameters of the optical signal is adjusted to be lower than a set value.

11. The method for compensating polarization mode dispersion according to claim 10, wherein the adjusting the change rate of the stokes parameters of the optical signal to be lower than the set value comprises:

setting the stokes parameters of the optical signal as S0' S1', S2', and S3', setting stokes parameters corresponding to a target SOP as S0 S1, S2, and S3, and
setting a function as follows:

$$f = \exp\left[\frac{1}{\left|S_1^{'} - S_1\right| + \left|S_2^{'} - S_2\right| + \left|S_3^{'} - S_3\right|}\right],$$

when an absolute value of the function f satisfies $|f| \leq$ a set threshold, the change rate of the stokes parameters that is corresponding to the $|f|$ is lower than a set value, and stokes parameters that are corresponding to a minimum value of the function f are constant values.

12. The method for compensating polarization mode dispersion according to any one of claims 9 to 11, wherein the extracting the polarization mode dispersion PMD value of the optical signal, generating the PMD control signal according to the PMD value, and through the PMD control signal, compensating the PMD of the optical signal whose SOP is adjusted comprises:

extracting stokes parameters of the optical signal whose PMD is compensated, calculating a degree of polarization DOP of the optical signal according to the stokes parameters, generating a PMD control signal according to the DOP, and through the PMD control signal, compensating a PMD of the optical signal whose SOP is adjusted, so that the DOP of the optical signal whose PMD is compensated reaches a maximum value.

FIG. 1

FIG. 2

Apparatus for
compensating PMD

Input
optical
signal

$S_{in}$

State of
polarization
adapting unit

Tap

$S_m$

PMD
compensation
unit

Tap

Optical signal
whose the PMD
is compensated

$S_{out}$

State of polarization
monitoring unit

PMD monitoring
unit

Control and algorithm unit

FIG. 3

1/4 waveplate   1/2 waveplate

FIG. 4

Waveplate with an
adjustable phase delay
and an adjustable
azimuth angle

1/4
waveplate

FIG. 5

Apparatus for compensating a PMD

FIG. 6

EP 2 434 664 A1

Apparatus for compensating a PMD

FIG. 7

PBS 0⁰

$S_0 S_1$

PBS 45⁰

$S_2$

1/4
waveplate   PBS 45⁰

$S_3$

FIG. 8

91

Extract a state of polarization SOP and a polarization mode
dispersion PMD value of an optical signal

92

Generate an SOP control signal according to the SOP, and
generate a PMD control signal according to the PMD value

93

Adjust the SOP of the optical signal through the SOP control
signal, and through the PMD control signal, compensate a
PMD of the optical signal whose SOP is adjusted

FIG. 9

## INTERNATIONAL SEARCH REPORT

| International application No. |
| --- |
| PCT/CN2010/072250 |

**A. CLASSIFICATION OF SUBJECT MATTER**

H04B10/00 (2006.01) i

According to International Patent Classification (IPC) or to both national classification and IPC

**B. FIELDS SEARCHED**

Minimum documentation searched (classification system followed by classification symbols)

IPC:H04B, G02F

Documentation searched other than minimum documentation to the extent that such documents are included in the fields searched

Electronic data base consulted during the international search (name of data base and, where practicable, search terms used)

CPRSABS,CPRABS,SIPOABS,CNKI,EPODOC,WPI: PMD, compensa+, SOP, change, rate, stokes, stab+

**C. DOCUMENTS CONSIDERED TO BE RELEVANT**

| Category* | Citation of document, with indication, where appropriate, of the relevant passages | Relevant to claim No. |
| --- | --- | --- |
| Y | CN201018509Y (Beijing university of posts and telecommunications) 06 Feb.2008 (06.02.2008) description page 3 paragraphs 4-11, figure 2 | 1-3, 5-10 |
| Y | Zhang Xiaoguang, Experimental research of polarization stabilization in optical fiber communication system, Acta Optica Sinica, Apr. 2009, vol. 4, page 889, column 1,ISSN 0253-2239 | 1-3, 5-10 |
| A | CN1545227A (Beijing university of posts and telecommunications) 10 Nov. 2004 (10.11.2004) the whole document | 4,11,12 |

☐ Further documents are listed in the continuation of Box C.  ☒ See patent family annex.

| | |
| --- | --- |
| * Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>24 Jun. 2010（24.06.2010） | Date of mailing of the international search report<br><br>**29 Jul. 2010 (29.07.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>SUN Changlu<br><br>Telephone No. (86-10)62411435 |

Form PCT/ISA /210 (second sheet) (July 2009)

| INTERNATIONAL SEARCH REPORT<br>Information on patent family members | | International application No.<br>PCT/CN2010/072250 | |
|---|---|---|---|
| Patent Documents referred<br>in the Report | Publication Date | Patent Family | Publication Date |
| CN201018509Y | 06.02.2008 | NONE | |
| CN1545227A | 10.11.2004 | CN1295894C | 17.01.2007 |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910086524